(19) Europäisches Patentamt

European Patent Office

Office européen des brevets

(11) **EP 1 154 919 B1**

(12) **EUROPÄISCHE PATENTSCHRIFT**

(45) Veröffentlichungstag und Bekanntmachung des Hinweises auf die Patenterteilung:
**09.06.2004 Patentblatt 2004/24**

(21) Anmeldenummer: **00909100.0**

(22) Anmeldetag: **25.01.2000**

(51) Int Cl.⁷: **B60T 8/00**, B60T 17/22

(86) Internationale Anmeldenummer:
**PCT/EP2000/000539**

(87) Internationale Veröffentlichungsnummer:
**WO 2000/048883 (24.08.2000 Gazette 2000/34)**

(54) **SENSORANORDNUNG MIT ÜBERWACHUNGSEINRICHTUNG, INSBESONDERE FÜR EIN ESP-SYSTEM FÜR FAHRZEUGE**

SENSOR SYSTEM WITH MONITORING DEVICE, NOTABLY FOR AN ESP SYSTEM FOR VEHICLES

SYSTEME DE CAPTEURS A DISPOSITIF DE SURVEILLANCE, EN PARTICULIER POUR UN SYSTEME DE PROGRAMME ELECTRONIQUE DE STABILITE POUR VEHICULES

(84) Benannte Vertragsstaaten:
**DE FR IT**

(30) Priorität: **18.02.1999 DE 19906799**
**03.08.1999 DE 19936439**

(43) Veröffentlichungstag der Anmeldung:
**21.11.2001 Patentblatt 2001/47**

(73) Patentinhaber: **Continental Teves AG & Co. OHG 60488 Frankfurt am Main (DE)**

(72) Erfinder:
• **DING, Eve, Limin**
**D-01968 Senftenberg (DE)**
• **HERBST, Ralf**
**D-56355 Nastätten (DE)**

(56) Entgegenhaltungen:
**EP-A- 0 762 363      EP-A- 0 913 746**
**DE-A- 4 219 457      DE-A- 19 607 429**
**DE-A- 19 725 058**

• **DORR R ET AL: "DETECTION, ISOLATION, AND IDENTIFICATION OF SENSOR FAULTS IN NUCLEAR POWER PLANTS" IEEE TRANSACTIONS ON CONTROL SYSTEMS TECHNOLOGY,US,IEEE INC. NEW YORK, Bd. 5, Nr. 1, 1. Januar 1997 (1997-01-01), Seiten 42-60, XP000690971 ISSN: 1063-6536**

**Beschreibung**

Die Erfindung betrifft eine Sensoranordnung mit überwachungseinrichtung sowie ein Verfahren zum Betrieb einer solchen Anordnung, insbesondere für ein elektronisches Stabilitätsprogramm (ESP) für Fahrzeuge.

Elektronische Stabilitätsprogramme dieser Art sind fahrdynamische Regelsysteme für Fahrzeuge, die dazu dienen, den Fahrer in kritischen Fahrsituationen während des Bremsens, Beschleunigens und Lenkens zu unterstützen und dort einzugreifen, wo der Fahrer selbst keine direkte Eingriffsmöglichkeit hat. Das Regelsystem unterstützt den Fahrer beim Bremsen, insbesondere auf einer Fahrbahn mit niedrigem oder wechselndem Reibwert, auf der das Fahrzeug wegen blockierender Räder nicht mehr steuerbar sein oder ins Schleudern geraten könnte, ferner beim Beschleunigen, wobei die Gefahr des Durchdrehens der Antriebsräder besteht, sowie schließlich beim Lenken in einer Kurve, in der das Fahrzeug über- oder untersteuern könnte. Insgesamt wird damit nicht nur der Komfort, sondern auch die aktive Sicherheit wesentlich verbessert.

Einem solchen Regelsystem liegt ein geschlossener Regelkreis zugrunde, der im Normalbetrieb des Fahrzeugs typische Regelaufgaben übernimmt und in extremen Fahrsituationen das Fahrzeug so schnell wie möglich abfangen soll. Als Istwertgeber sind dabei Sensoren zur Erfassung der verschiedenen fahrdynamischen Parameter von besonderer Bedeutung. Eine plausible Regelung setzt voraus, daß die Sensoren den Istzustand der Regelstrecke korrekt wiedergeben. Dies ist bei Fahrstabilitätsregelungen in extremen Fahrsituationen, in denen eine Regelabweichung schon innerhalb einer sehr kurzen Zeit ausgeregelt werden muß, besonders wichtig. Aus diesem Grunde müssen bei einem elektronischen Stabilitätsprogramm die ESP-Sensoren (Gierratensensor, Querbeschleunigungssensor, Lenkwinkelsensor) besonders zuverlässig sein und ständig überwacht werden, um Fehler frühzeitig erkennen zu können, damit eine Fehlregelung, die das Fahrzeug in einen sicherheitskritischen Zustand bringen könnte, ausgeschlossen wird.

Aus der EP-A-0 913 746 ist eine Sensoranordnung mit Überwachungseinrichtung bekannt, die mindestens zwei redundante Sensoren zur Erfassung von Meßgrößen sowie eine Überwachungseinrichtung mit zumindest einem Subtrahierer zur Erzeugung einer Differenz zwischen je zwei Sensor-Ausgangssignalen aufweist. Die Differenz wird mit Schwellenwerten verglichen, und beim Überschreiten wird eine Fehlermeldung erzeugt.

Der Erfindung liegt deshalb die Aufgabe zugrunde, eine Sensoranordnung mit einer Überwachungseinrichtung und ein Verfahren zum Betrieb einer solchen Anordnung zu schaffen, mit der / dem auf kostengünstige Weise eine für ein elektronisches Stabilitätsprogramm (ESP) für Fahrzeuge erforderliche Zuverlässigkeit erreicht werden kann.

Gelöst wird diese Aufgabe gemäß Anspruch 1 dadurch, daß die Sensoranordnung mindestens zwei redundante Sensoren zur Erfassung einer Prozeßführungs- oder Prozeßmeßgröße eines Prozesses aufweist und daß die überwachungseinrichtung einen ersten Subtrahierer zur Erzeugung einer ersten Differenz zwischen den Sensor-Ausgangssignalen, einen ersten und einen zweiten Differenzierer zur zeitlichen Ableitung der Sensor-Ausgangssignale, einen zweiten Subtrahierer zur Erzeugung einer zweiten Differenz zwischen den differenzierten Sensor-Ausgangssignalen, sowie eine Fehleranalyseeinrichtung aufweist, mit der die erste und die zweite Differenz jeweils mit einem vorbestimmbaren ersten bzw. zweiten Schwellwert verglichen und eine Fehlermeldung erzeugt wird, wenn mindestens eine der Differenzen den betreffenden Schwellwert übersteigt.

Mit dieser Anordnung werden Sensorfehler besonders zuverlässig erkannt, wenn zum Betrieb der Anordnung die Schwellwerte gemäß den Ansprüchen 5 oder 6 festgelegt werden.

In besonders vorteilhafter Weise ist die Erfindung mit einem ESP-System für Fahrzeuge kombinierbar, das durch eine Mikroprozessoreinheit gesteuert ist, wobei die Sensoranordnung durch Sensorpaare in Form von jeweils zwei redundanten Gierratensensoren, zwei redundanten Querbeschleunigungssensoren und / oder zwei redundanten Lenkwinkelsensoren gebildet und die Überwachungseinrichtung durch ein Unterprogramm in der Mikroprozessoreinheit implementiert ist.

Die Erfindung ist insbesondere zur Kombination mit einer modellgestützten Überwachung der Sensoren eines elektronischen Stabilitätsprogramms (ESP) für Fahrzeuge geeignet, die in der parallelen Anmeldung (DE 199 29 155.1) beschrieben wird und hiermit durch Bezugname zum Bestandteil dieser Offenbarung gemacht werden soll. Bei jenem System wird jeweils einer der Sensoren dadurch überwacht, daß sein Ausgangssignal mit analytischen Referenzwerten (Redundanzen) verglichen wird, die mit Hilfe eines Mehrfachprozeßmodells aus aktuell nicht zu überwachenden Prozeßführungs- oder Prozeßmeßgrößen ermittelt werden. Die Genauigkeit der berechneten Referenzwerte ist jedoch von der Fahrsituation abhängig, so daß es nicht auszuschließen ist, daß bestimmte Fehler in bestimmten Fahrsituationen nicht oder zu spät erkannt werden. Für diese Fälle bietet die Erfindung Abhilfe.

Ein besonderer vorteil dieser Erfindung besteht darin, daß die Überwachungszeit sehr kurz und der Aufwand sehr gering gehalten werden kann.

Die Unteransprüche haben vorteilhafte Weiterbildungen der Erfindung zum Inhalt.

weitere Einzelheiten, Merkmale und Vorteile der Erfindung ergeben sich aus der folgenden Beschreibung von bevorzugten Ausführungsformen. Es zeigt:

Fig. 1 ein Blockschaltbild einer erfindungsgemäßen Sensorüberwachung;
Fig. 2 eine Detaildarstellung aus Figur 1 und
Fig. 3 einen typischen Verlauf eines Sensorfehlers entsprechend seiner Spezifikation.

Die Erfindung wird bevorzugt zur Überwachung von Sensoren verwendet, die in einem elektronischen Fahrstabilitätsprogramm (ESP) für Fahrzeuge Anwendung finden. Ein solches ESP-System umfaßt im allgemeinen einen Gierratensensor, einen Lenkwinkelsensor, sowie einen Querbeschleunigungssensor. Die Erfindung ist darüberhinaus auch zur Überwachung von Raddrehzahlsensoren für Antiblockier- und Antischlupfregelsysteme sowie allgemein zur Überwachung von Sensoren geeignet, die in Abhängigkeit von einer zu erfassenden Prozeßmeß- oder Prozeßführungsgröße ein Ausgangssignal erzeugen. Die Überwachung kann zyklisch mit vorbestimmten Zeitabständen und bei Inbetriebnahme des Systems erfolgen.

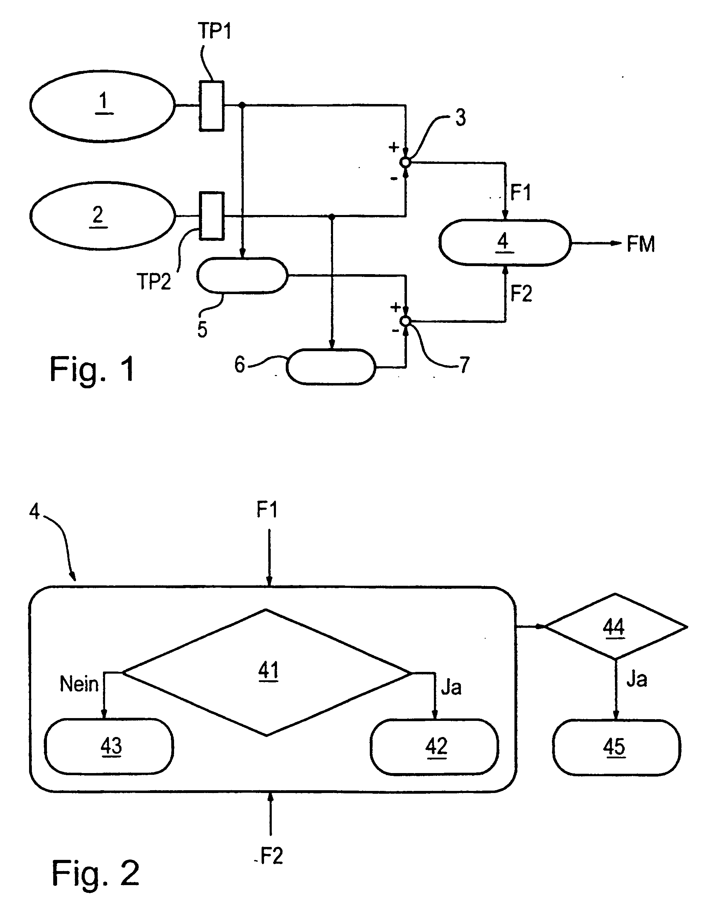

Figur 1 zeigt ein Blockschaltbild einer erfindungsgemäßen Sensorüberwachung. Beispielhaft wird hier die Überwachung eines Gierratensensors erläutert. Das Prinzip ist jedoch in gleicher Weise auch auf andere Sensoren anwendbar.

Gemäß Figur 1 sind zur Überwachung einer Gierrate zwei gleiche Sensoren, nämlich ein erster und ein zweiter Gierratensensor 1, 2 vorgesehen, deren Ausgangssignale über einen ersten bzw. einen zweiten PT1-Tiefpaß TP1, TP2 geführt und dann mit einem ersten Subtrahierer 3 voneinander subtrahiert werden. Die über den ersten und zweiten Tiefpaß TP1, TP2 gefilterten Ausgangssignale der Gierratensensoren 1, 2 werden weiterhin über einen ersten bzw. zweiten Differenzierer 5, 6 zur Erzeugung einer zeitlichen Ableitung geführt und anschließend mit einem zweiten Subtrahierer 7 voneinander subtrahiert. Das Ausgangssignal des ersten Subtrahierers 3 (erste Differenz F1) stellt ein Gierraten-Fehlersignal, das Ausgangssignal des zweiten Subtrahierers 7 (zweite Differenz F2) ein Gierbeschleunigungs-Fehlersignal dar. Diese beiden Differenzen liegen an einer Einrichtung 4 zur Fehleranalyse an, die nach entsprechender Auswertung der Signale ggf. eine Fehlermeldung FM erzeugt.

Die Funktion der Einrichtung 4 zur Fehleranalyse ist in Figur 2 als Ablaufdiagramm dargestellt. Mit einem ersten Schritt 41 werden die beiden Differenzen F1, F2 jeweils mit einem ersten bzw. zweiten Schwellwert S1, S2 verglichen werden. Wenn mindestens eine der Differenzen den zugeordneten Schwellwert übersteigt, wird mit einem zweiten Schritt 42 der Stand eines Zählers um einen bestimmten Wert, vorzugsweise den Wert "1" erhöht. Wenn die beiden Differenzen F1, F2 gleich oder kleiner sind, als der betreffende jeweilige Schwellwert und der Zählerstand einen positiven Wert aufweist, so wird mit einem dritten Schritt 43 der Zählerstand um den gleichen Wert vermindert. Mit einem vierten Schritt 44 wird dann der Zählerstand mit einem dritten Schwellwert S3 verglichen. Wenn der Zählerstand diesen Schwellwert übersteigt, wird mit einem fünften Schritt 45 die Fehlermeldung FM erzeugt und der Zähler wieder auf 0 gesetzt.

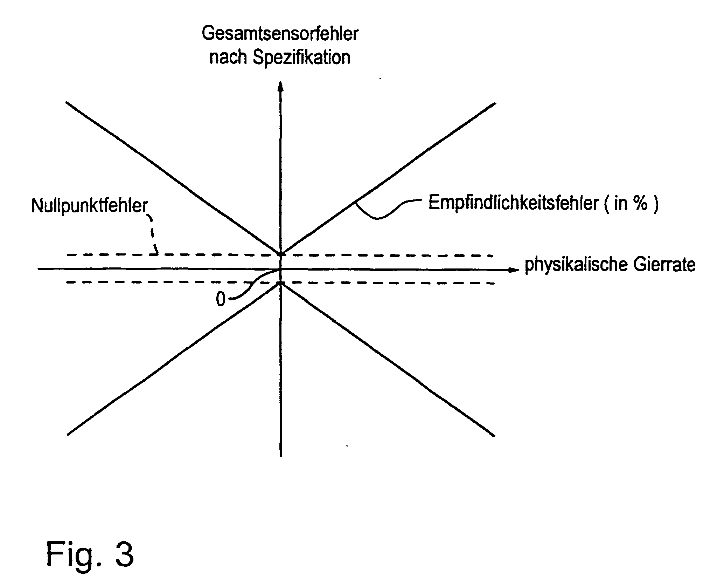

Die Festlegung des ersten und zweiten Schwellwertes S1, S2 erfolgt unter Berücksichtigung der Tatsache, daß Sensoren aufgrund ihrer Art und Herstellung nur eine begrenzte Genauigkeit erreichen können. Die sich daraus ergebenden Sensorfehler sind nach ihrer Spezifikation für einen Gierratensensor in Figur 3 dargestellt. Auf der horizontalen Achse ist.dabei die physikalische Gierrate, auf der vertikalen Achse der Gesamtsensorfehler nach der Spezifikation aufgetragen. Parallel zur horizontalen Achse sind mit gestrichelten Linien die Nullpunktfehler eingetragen, während mit durchgezogenen Linien die Empfindlichkeitsfehler in Prozent dargestellt sind. Um diese Sensorfehler zu tolerieren, wird der erste Schwellwert S1 für die Gierrate wie folgt festgelegt:

$$S1 = 2 * (| \text{ Nullpunktfehler } | + | \text{ Gierratenmaximum } * \text{ Empfindlichkeitsfehler } |)$$

Bei Annahme des in Figur 3 gezeigten Nullpunktfehlers und eines Empfindlichkeitsfehler von etwa 6 % ergibt sich bei einem Gierratenmaximum von 90° pro Sekunde der erste Schwellwert S1 für die Gierrate zu etwa 15°/sek.

Der zweite Schwellwert S2 für die Gierbeschleunigung wird durch Fahrversuche ermittelt und kann vorzugsweise zum Beispiel 60°/sek2 betragen.

Bei dieser ersten Ausführungsform sind die beiden Schwellwerte S1, S2 konstant und unabhängig von der Fahrsituation. Die Schwellwerte müssen deshalb so groß gewählt werden, daß falsche Fehlermeldungen und Deaktivierungen des ESP-Systems aufgrund der Nullpunktfehler und der Empfindlichkeitsfehler im gesamten praktischen Betriebsbereich vermieden werden. Andererseits können aus diesem Grund kleine Fehler auch während einer Geradeausfahrt möglicherweise nicht entdeckt werden.

Bei einer zweiten Ausführungsform der Erfindung wird deshalb ein stationäres Fahrverhalten wie folgt definiert: wenn

- - die Differenz zwischen einem aus dem Lenkwinkel berechneten ersten Referenzsignal (Ref_Lenkwinkel) und einem aus der Querbeschleunigung berechneten zweiten Referenzsignal (Ref_Querbeschleunigung) kleiner oder gleich 10°/sek ist,

- - eine Fahrzeug-Referenzgeschwindigkeit gleich oder größer als 10,8 km/h ist,
- - die Querbeschleunigung gleich oder kleiner als 0,4 g ist und
- - die Lenkwinkelgeschwindigkeit gleich oder kleiner als 100°/sek ist,

so wird das Fahrverhalten als stationär bezeichnet. Dieser Zustand kann mit den ESP-Sensoren, mit Raddrehzahlsensoren usw. erfaßt werden. wenn sich das Fahrzeug in einem solchen stationären Zustand befindet, werden die Schwellwerte wie folgt eingestellt:

$$S1 = 2 * (| \text{ Nullpunktfehler } |) + \max(\text{Referenzsignalfehler})$$

$$+$$

$$(\text{Ref\_Lenkwinkel} + \text{Ref\_Querbeschleunigung}) / 16$$

$$S2 = 40\% \text{ des Wertes von S2 bei der ersten Ausführungsform.}$$

Der erste Schwellwert S1 für die Gierrate kann minimal bei etwa 7°/sek, der zweite Schwellwert S2 für die Gierbeschleunigung kann bei etwa 25 °/sek liegen.

Dies bedeutet, daß im stationären Fahrzustand (im wesentlichen Geradeausfahrt) die Schwellwerte minimal sind und zum Beispiel während einer stationären Kreisfahrt zumindest der erste Schwellwert S1 für die Gierrate entsprechend den Gierraten-Referenzsignalen erhöht wird, um die Empfindlichkeitsfehler des Sensors zu tolerieren.

Die Berechnung des ersten und zweiten Referenzsignals (Ref_Lenkwinkel, Ref_Querbeschleunigung) erfolgt durch Modellbildung für die Gierrate aus dem Lenkwinkel bzw. der Querbeschleunigung zum Beispiel nach folgenden Modellen, die in der eingangs genannten parallelen Anmeldung beschrieben sind:

$$\dot{\psi} = \frac{\delta_L}{i_L l} \ \frac{v_{ref}}{(l + (\frac{v_{ref}}{v_{ch}})^2)} \qquad \text{und} \qquad \alpha_q = v_{ref} \dot{\psi}$$

Es bedeuten:

$v_{ref}$     Fahrzeugreferenzgeschwindigkeit;
$\dot{\psi}$     Gierrate;
$\alpha_q$     Querbeschleunigung;
$\delta_L$     Lenkradwinkel;
$i_L$     Lenkübersetzung;
$l$     Radstand;
$v_{ch}$     charakteristische Fahrgeschwindigkeit.

Die praktische Realisierung erfolgt vorzugsweise mit dem zur ESP-Regelung verwendeten Mikroprozessorsystem, wobei die Verarbeitung der Sensorsignale durch ein entsprechendes (Unter-) Programm gesteuert wird. Praktische Versuche haben dabei gezeigt, daß bei stabiler Geradeausfahrt auch kleine Sensorfehler erkannt werden.

**Patentansprüche**

1. Sensoranordnung mit Überwachungseinrichtung, **dadurch gekennzeichnet, daß** die Sensoranordnung mindestens zwei redundante Sensoren (1, 2) zur Erfassung einer Prozeßführungs- oder Prozeßmeßgröße eines Prozesses aufweist und daß die Überwachungseinrichtung einen ersten Subtrahierer (3) zur Erzeugung einer ersten Differenz (F1) zwischen den Sensor-Ausgangssignalen, einen ersten und einen zweiten Differenzierer (5, 6) zur zeitlichen Ableitung der Sensor-Ausgangssignale, einen zweiten Subtrahierer (7) zur Erzeugung einer zweiten Differenz (F2) zwischen den differenzierten Sensor-Ausgangssignalen, sowie eine Fehleranalyseeinrichtung (4) aufweist, mit der die erste und die zweite Differenz jeweils mit einem vorbestimmbaren ersten bzw. zweiten Schwellwert (S1, S2) verglichen und eine Fehlermeldung (FM) erzeugt wird, wenn mindestens eine der Differenzen den betreffenden Schwellwert übersteigt.

2. Sensoranordnung nach Anspruch 1, **dadurch gekennzeichnet, daß** ein Zähler vorgesehen ist, der um einen vorbestimmbaren Wert inkrementiert wird, wenn mindestens eine der Differenzen (F1, F2) den zugeordneten Schwellwert übersteigt, und der um einen vorbestimmbaren Wert dekrementiert wird, wenn keine der Differenzen (F1, F2) den zugeordneten Schwellwert übersteigt, und daß die Fehlermeldung (FM) erzeugt wird, wenn der Zählerstand einen vorbestimmbaren dritten Schwellwert (S3) übersteigt.

3. Sensoranordnung nach Anspruch 1 oder 2, **dadurch gekennzeichnet, daß** der Prozeß ein elektronisches Fahrstabilitätsprogramm (ESP) für Fahrzeuge ist und die Sensoranordnung zwei redundante Gierratensensoren, zwei redundante Querbeschleunigungssensoren und / oder zwei redundante Lenkwinkelsensoren umfaßt.

4. Sensoranordnung nach einem der Ansprüche 1 bis 3, **dadurch gekennzeichnet, daß** die Sensor-Ausgangssignale über jeweils einen PT1-Tiefpaß (TP1, TP2) geführt werden.

5. Verfahren zum Betrieb einer Sensoranordnung nach einem der vorhergehenden Ansprüche, wobei die Sensoranordnung durch Sensorpaare in Form von jeweils zwei redundanten Gierratensensoren, zwei redundanten Querbeschleunigungssensoren und / oder zwei redundanten Lenkwinkelsensoren für ein ESP-System für Fahrzeuge gebildet ist,
**dadurch gekennzeichnet, daß** zur Überwachung der Gierratensensoren der erste Schwellwert (S1) für die Gierrate entsprechend den spezifizierten Fehlern eines Gierratensensors gemäß folgender Formel bestimmt wird:

$$S1 = 2 * (| \text{ Nullpunktfehler }) | + | \text{ Gierratenmaximum } *$$

$$\text{Empfindlichkeitsfehler }|)$$

6. Verfahren nach Anspruch 5, **dadurch gekennzeichnet, daß** bei einer Erfassung eines vorbestimmten stationären Fahrverhaltens zur Überwachung der Gierratensensoren der erste Schwellwert (S1) für die Gierrate gemäß folgender Formel festgelegt wird:

$$S1 = 2 * (| \text{ Nullpunktfehler }|) + \text{ maximaler Referenzsi-}$$

$$\text{gnalfehler } + (\text{Referenz-Lenkwinkel } + \text{ Referenz-}$$

$$\text{Querbeschleunigung}) / 16.$$

7. verfahren nach Anspruch 5 oder 6,
**dadurch gekennzeichnet, daß** die Sensorpaare zyklisch überwacht werden und der erste und zweite Schwellwert für jedes Sensorpaar ermittelt wird.

8. ESP-System für Fahrzeuge, das durch eine Mikroprozessoreinheit gesteuert ist,
**gekennzeichnet durch** eine Sensoranordnung mit Überwachungseinrichtung nach Anspruch 1 oder 2, wobei die Sensoranordnung **durch** Sensorpaare in Form von jeweils zwei redundanten Gierratensensoren, zwei redundanten Querbeschleunigungssensoren und / oder zwei redundanten Lenkwinkelsensoren gebildet ist und die Überwachungseinrichtung **durch** ein Unterprogramm in der Mikroprozessoreinheit implementiert ist.

**Claims**

1. Sensor system with monitoring device,
**characterized in that** the sensor system includes at least two redundant sensors (1, 2) for sensing a process reference variable or process measured variable of a process, and **in that** the monitoring device includes a first subtractor (3) for producing a first difference (F1) between the sensor output signals, a first and a second differentiator (5, 6) for the time derivative of the sensor output signals, a second subtractor (7) for producing a second difference (F2) between the differentiated sensor output signals, and a fault analysis device (4) by which the first and the second difference is respectively compared with a predeterminable first or second threshold value (S1, S2), and a fault message (FM) is produced when at least one of the differences exceeds the threshold value concerned.

2. Sensor system as claimed in claim 1,
   **characterized in that** a counter is provided which is incremented by a predeterminable value when at least one of the differences (F1, F2) exceeds the associated threshold value, and which is decremented by a predeterminable value when none of the differences (F1, F2) exceed the predeterminable value, and **in that** the fault message (FM) is produced when the count exceeds a predeterminable third threshold value (S3).

3. Sensor system as claimed in claim 1 or claim 2,
   **characterized in that** the process is an electronic driving stability program (ESP) for vehicles, and the sensor system comprises two redundant yaw rate sensors, two redundant transverse acceleration sensors, and/or two redundant steering angle sensors.

4. Sensor system as claimed in any one of claims 1 to 3,
   **characterized in that** the sensor output signals are conveyed through respectively one PT1 low-pass filter (TP1, TP2).

5. Method of operating a sensor system as claimed in any one of the preceding claims, wherein the sensor system is comprised of pairs of sensors in the form of respectively two redundant yaw rate sensors, two redundant transverse acceleration sensors, and/or two redundant steering angle sensors for an ESP system for vehicles,
   **characterized in that** for monitoring the yaw rate sensors, the first threshold value (S1) for the yaw rate, depending on the specified faults of a yaw rate sensor, is determined according to the following relation:

$$S1 = 2 * (|\text{zero offset error} | + I \text{ yaw rate maximum} *$$

$$\text{sensitivity error} |).$$

6. Method as claimed in claim 5,
   **characterized in that** when sensing a predetermined stationary driving behaviour, for monitoring the yaw rate sensors, the first threshold value (S1) for the yaw rate is fixed according to the following relation:

$$S1 = 2 * (| \text{ zero offset error} |) + \text{maximum reference}$$

$$\text{signal error}) + (\text{reference steering angle} + \text{reference}$$

$$\text{transverse acceleration}) / 16.$$

7. Method as claimed in claim 5 or claim 6,
   **characterized in that** the pairs of sensors are monitored cyclically and the first and second threshold value for each pair of sensors is determined.

8. ESP system for vehicles, which is controlled by a microprocessor unit,
   **characterized by** a sensor system with monitoring device as claimed in claim 1 or 2, wherein the sensor system is comprised of pairs of sensors in the form of respectively two redundant yaw rate sensors, two redundant transverse acceleration sensors, and/or two redundant steering angle sensors, and the monitoring device is implemented by a subprogram in the microprocessor unit.

**Revendications**

1. Système de capteurs avec un dispositif de contrôle, **caractérisé en ce que** le système de capteurs comporte au moins deux capteurs redondants (1, 2) pour l'enregistrement d'une grandeur de guidage d'un processus ou d'une grandeur de mesure d'un processus et **en ce que** le dispositif de contrôle comporte un premier soustracteur (3) pour générer une première différence (F1) entre les signaux de sortie des capteurs, un premier et un deuxième différenciateur (5, 6) pour générer la dérivée en fonction du temps des signaux de sortie des capteurs, un deuxième soustracteur (7) pour générer une deuxième différence (F2) entre les signaux de sortie différenciés des capteurs, ainsi qu'une unité d'analyse des erreurs (4), par laquelle la première et la deuxième différence peuvent être comparées respectivement avec une première et une deuxième valeur seuil (S1, S2) prédéfinissables et qui génère un message d'erreur (FM) lorsque au moins une des différences dépasse la valeur seuil concernée.

2. Système de capteurs selon la revendication 1, **caractérisé en ce qu'**il est prévu un compteur, qui peut être incrémenté d'un valeur prédéfinissable, quand au moins une des différences (F1, F2) dépasse la valeur seuil correspondante, et qui peut être décrémenté d'une valeur prédéfinissable quand aucune des différences (F1, F2) ne dépasse la valeur seuil correspondante et **en ce que** le message d'erreur (FM) est généré lorsque la position du compteur dépasse une troisième valeur seuil (S3) prédéfinissable.

3. Système de capteurs selon la revendication 1 ou 2, **caractérisé en ce que** le processus est un programme électronique de stabilité (ESP) pour véhicules et le système de capteurs comporte deux capteurs de vitesse de lacet redondants, deux capteurs d'accélération transversale redondants et/ou deux capteurs d'angle de braquage du volant redondants.

4. Système de capteurs selon l'une quelconque des revendications 1 à 3, **caractérisé en ce que** les signaux de sortie du capteur passent chacun par un filtre passe-bas PT1 (TP1, TP2).

5. Procédé d'exploitation d'un système de capteurs selon l'une quelconque des revendications précédentes, dans lequel le système de capteurs est formé par des paires de capteurs, qui sont formées chacune par deux capteurs de vitesse de lacet redondants, deux capteurs d'accélération transversale redondants et/ou deux capteurs d'angle de braquage du volant redondants pour un système ESP pour véhicules, **caractérisé en ce que**, pour le contrôle des capteurs de vitesse de lacet, la première valeur seuil (S1) est déterminée pour la vitesse de lacet conformément à des erreurs spécifiques d'un capteur de vitesse de lacet selon la formule suivante : S1 = 2 * (|déviation du zéro + |vitesse de lacet maximum * erreur de sensibilité|).

6. Procédé selon la revendication 5, **caractérisé en ce que**, dans le cas d'un enregistrement d'un comportement de conduite stationnaire pour le contrôle des capteurs de vitesse de lacet, la première valeur seuil (S1) pour la vitesse de lacet est définie selon la formule suivante :

$$S1 = 2 * (|\text{déviation du zéro}|) + \text{erreur de signal de référence maximum} +$$

$$\text{angle volant de référence} + \text{accélération transversale de référence}) / 16.$$

7. Procédé selon la revendication 5 ou 6, **caractérisé en ce que** les paires de capteurs sont contrôlées cycliquement et la première et la deuxième valeur seuil est déterminée pour chaque paire de capteurs.

8. Système ESP pour véhicules, qui est commandé par une unité de microprocesseur, **caractérisé par** un système de capteurs avec un dispositif de contrôle selon la revendication 1 ou 2, le système de capteurs étant formé par des paires de capteurs, qui sont formées chacune par deux capteurs de vitesse de lacet redondants, deux capteurs d'accélération transversale redondants et/ou deux capteurs d'angle de braquage du volant redondants, et le dispositif de contrôle étant implémenté par un sous-programme dans l'unité de microprocesseur.

**Fig. 1**

**Fig. 2**

Fig. 3